# EUROPEAN PATENT SPECIFICATION

(11) **EP 0 652 850 B1**
(45) Date of publication and mention of the grant of the patent: **04.09.1996**
(21) Application number: 93915604.8
(22) Date of filing: 15.07.1993
(51) Int. Cl.: C01F 7/06

(54) **IMPROVED PROCESS AND APPARATUS FOR DIGESTION OF BAUXITE**
VERBESSERTES VERFAHREN UND VORRICHTUNG ZUM AUFSCHLIESSEN VON BAUXIT
DISPOSITIF ET PROCEDE AMELIORES DE DIGESTION DE LA BAUXITE

(30) Priority: 29.07.1992 US 922166
(43) Date of publication of application: 17.05.1995
(73) Proprietor: ALCAN INTERNATIONAL LIMITED, Montreal Quebec H3A 3G2 (CA)
(72) Inventor: FULFORD, George, Dennison, Kingston, Ontario K7M 1L6 (CA)
(74) Representative: Gaunt, Robert John
(86) International application number: CA9300291
(87) International publication number: WO9403396

(56) References cited:
- US-A- 4 324 769
- US-A- 4 426 363
- PATENT ABSTRACTS OF JAPAN vol. 012, no. 096 (C-484)29 March 1988 & JP,A,62 230 613 (NIPPON LIGHT METAL)
- R.D. ZABREZNIK 'LIGHT METALS 1987' 1987 , METALLURGICAL SOCIETY OF AIME , WARRENDALE (US)
- PATENT ABSTRACTS OF JAPAN vol. 012, no. 096 (C-484)29 March 1988 & JP,A,62 230 613

## Description

This invention relates to a process for extracting gibbsite (alumina trihydrate) and boehmite (alumina monohydrate) with a caustic solution, and to an apparatus for carrying out the process. More particularly, the present invention relates to a process and apparatus wherein the digestion of both monohydrate and trihydrate can be carried out separately under conditions suitable for extracting each form of alumina.

### Background Art

In the Bayer process, alumina is reacted with strong base in the form of caustic soda solution to form sodium aluminate, which is readily soluble in caustic soda solutions. The sodium aluminate solution may be filtered off and the residue containing oxides of iron, silicon, titanium, and remaining unwanted byproducts of the digestion process (commonly known as "red mud") may be separated for disposal or further processing. During the subsequent processing of the red muds, they are subjected to a counter current washing procedure followed by a thickening process to recover the dissolved caustic soda and aluminate values. This counter current washing thickening operation produces a liquor, known as wash thickener overflow, of moderate caustic and aluminate content, which is returned to the circuit. In the Bayer process, the bauxite is usually digested under pressure with hot sodium hydroxide to form a solution of sodium aluminate. The sodium aluminate solution can then be cooled, diluted, seeded and agitated to cause precipitation of purified alumina hydrate. The caustic-aluminate mother liquor, called spent liquor, left after the precipitation is reconditioned and recycled to the digestion step.

As mentioned above, alumina in bauxite generally exists predominantly in the form of alumina trihydrate (Al₂O₃·3H₂O) but also as alumina monohydrate (Al₂O₃·H₂O). Alumina monohydrate does not dissolve in caustic solution or spent liquor as easily or to as great an extent as alumina trihydrate. The monohydrate requires either a higher caustic concentration or a higher digestion temperature (and possibly pressure) to dissolve substantially all of the aluminum monohydrate contained in the bauxite. Attempts have been made to increase extraction efficiency of aluminum monohydrate by lowering the alumina-to-caustic (A/C) digestion ratio in digestion or by raising the digestion temperature.

To digest bauxite containing alumina trihydrate and a recoverable amount of alumina monohydrate, at least part of the digestion step is commonly carried out at a high temperature and high pressure. In one conventional process, often called the single digestion process, the digestion of both monohydrate and trihydrate is carried out under the more extreme digestion conditions suitable for monohydrate containing ores. In another digestion process, frequently called the double digestion process, the ground bauxite is first digested under digestion conditions suitable for trihydrate, and the resulting residue is digested under conditions suitable for monohydrate, under intermediate conditions.

A number of double digestion two stream digestion processes have been developed. Rijkeboer et al. in EP 0389061 appears to discuss a process for the treatment of a bauxite containing both trihydrate (gibbsitic) and monohydrate (boehmitic) alumina. It comprises digestion of a portion of the desilicated bauxite slurry from the tank of the desilication circuit, at atmospheric pressure in the vessel. Here the gibbsitic alumina values in the bauxite are partially extracted in the spent liquor heated in the first stage of the low temperature heat exchanger. The product slurry is separated in the slurry thickener into an overflow, and a thickened solid/liquid slurry underflow. The overflow is sent to the test tank. This liquor has a reduced free caustic concentration by virtue of having extracted alumina values from the bauxite and containing an increased concentration of dissolved alumina. Due to its reduced free caustic concentration, it can be further heated in the remaining stages of the heat exchangers while causing reduced corrosion of the steel heater tubes and piping. The thickener underflow is sent to the high pressure digester where it combines with the heated solution exiting from the high temperature heat exchangers to complete the extraction of the remaining alumina values in the bauxite in the high temperature digester.

By making it possible to raise the caustic concentration at the test tank for the same limiting free caustic concentration in the heaters, this scheme makes possible a limited increase in liquor productivity in the digester and a modest increase in the maximum production in a given digestion unit. It obviously requires addition of a moderately large atmospheric digester (due to the relatively low rates of reaction at ∼ 100°C) and an additional mud separation stage. It is restricted from further gains due to the fact that the final alumina concentration in the liquor after digestion continues to be controlled by the relatively low solubility of the boehmitic Al₂O₃ which is the last to extract in this co-current double digest system.

The foregoing process, however, appears to have several disadvantages. The process does not appear to provide for desilication after low-pressure digestion. Moreover, the overflow liquor from thickening following low-pressure digestion is recombined with the solid/liquid slurry. The entire recombined bauxite slurry then undergoes a second digestion at high pressure and temperature.

U.S. Patent 4,994,244 shows that a countercurrent double digest avoids these difficulties, and brings additional significant process benefits in the case of gibbsite/boehmite mixed bauxites. This uses a first digestion of the bauxite in a liquor issuing from the second digest and already containing a significant A/C ratio, to extract the gibbsite alumina, which is highly soluble, permitting a liquor of very high alumina concentration, and hence very high liquor productivity to be obtained. This is separated from the solid residue at or close to the first digester temperature in a pressure mud separation step, after which the liquor can be desilicated and sent to the polishing filtration, if needed, and then to the alumina precipitation circuit. The solid residue, still containing unextracted boehmite alumina, is passed to a second digest to be reacted with spent liquor and digested under intermediate conditions, significantly less drastic than in the single digest or co-current double digest case discussed above, to extract the boehmite alumina at a relatively low alumina to caustic ratio, which permits the lowering of the digestion temperature. The fully extracted red mud is then separated a second time in a pressure mud separation step at a temperature equal to the second digest temperature or after partial cooling to the first digest temperature, or at some temperature intermediate between these temperatures.

The thickened red mud slurry is then passed to a washing circuit of the conventional type, while the intermediate-ratio liquor (which at this point has a very low liquor productivity) is passed back to the first digestion countercurrently to have its alumina concentration boosted by dissolution of highly soluble gibbsite alumina to an attractive liquor productivity.

U.S. Patent 4,994,244 also shows that under certain circumstances it may be attractive to apply this type of counter-current double digestion to a purely gibbsitic bauxite by using two countercurrent gibbsite digests both at about the same temperature.

While this process has large operating advantages, and will also be less costly in terms of equipment costs than a single high-temperature digestion process for a mixed trihydrate/monohydrate bauxite if a new plant is to be built, it has the serious disadvantage that it is extremely difficult to retrofit quickly and efficiently into an existing, operating single-high-temperature-digest plant for a mixed bauxite plant, so as to make the process benefits of the countercurrent double digest processes available to older, already existing plants so as to permit these to compete with improved new plants.

These difficulties are particularly acute when the existing high-temperature plant has only one digester train, since the modification of the single digest train to a countercurrent double digest involves major piping and equipment changes, and while these are being made the plant has to be shut down, with a major loss of production, probably a complete shut-down for several months. Furthermore, even after the change to a countercurrent double digestion has been installed, only incomplete use can be made of some of the equipment investment which originally existed before the retrofit. Furthermore, once these changes have been installed, it is impossible to revert easily to the original flowsheet. Hence, in addition to the loss in production made during the physical retrofit of the plant there may be additional losses in production while the operating staff is retrained to operate the retrofitted plant.

### Disclosure of the Invention

Therefore, it is a primary object of the invention to develop a two-step digestion process wherein trihydrate may be digested at temperatures and conditions suitable for trihydrate digestion and monohydrate may be digested separately from trihydrate at temperatures and conditions suitable for its extraction which is especially amenable to being easily, and at low cost, retrofitted into an existing single step digestion process. The present invention therefore broadly contemplates a modification of the Bayer process and an apparatus for carrying out such modification which is capable of digesting mono- and trihydrates separately at suitable digestion conditions.

Quite unexpectedly, it has been found that by connecting a part of the new equipment required for retrofitting the improved countercurrent double digestion process into an existing single digest plant in a different and somewhat counter-intuitive manner, a still further and novel double-digest process which is neither countercurrent nor concurrent (as in the EP 0389061) in nature can be obtained and which is best described as a cross-flow double-digest. This arrangement achieves many, but not quite all, of the major advantages of the countercurrent double-digest, avoids the disadvantages of the concurrent double-digest, and very surprisingly, is extremely simple to retrofit into most existing single-digest plant configurations with negligible downtime losses during the change, permits a significant increase in production to be achieved in most cases from the existing investment in digestion equipment, makes better use of all the existing equipment than the retrofitting of a countercurrent double digest, and in addition, permits reversion to the original flowsheet, should this be necessary during the period of learning to operate the modified plant, by merely closing a few valves.

These benefits of the cross flow double digest are applicable in the cases of retrofitting a single high-temperature digest plant for handling mixed trihydrate/monohydrate bauxites and also for retrofitting single low-temperature digest plants for handling trihydrate bauxites. Most of the detailed description given below refers to the more difficult cases of plants for handling trihydrate/monohydrate bauxites, and the extension to the case of double trihydrate digests is intended to be covered by analogy.

It is shown below that the part of the process for extracting the monohydrate bauxite from a mixed trihydrate/monohydrate bauxite has a greatly reduced liquor flow in the retrofitted cross flow double digest, compared to the original design, where this part of the process has to extract both forms of alumina. It follows that there will be great flexibility in this part of the process, and use can optionally be made of this, where necessary, to reduce the danger of corrosion of steel heater tubes at the higher temperatures as the caustic concentration is increased in the main plant loop by introducing a suitable stream to reduce the free caustic concentration only in the relatively small part of the total liquor flow which passes through that higher temperature part of the process which is subject to free-caustic corrosion. Thus full use can be made of the increased caustic concentration to increase liquor productivity and production rates in the larger part of the liquor flow which passes only through the lower temperature parts of the process which are not subject to free-caustic corrosion attack.

The invention provides for a cross flow double digestion for extracting alumina values from bauxite. The bauxite may be made up of a mixture of trihydrate and monohydrate alumina, but is equally applicable to a bauxite containing primarily trihydrate alumina. We will consider mainly the case of bauxite containing both monohydrate and trihydrate alumina.

The present invention in its broadest aspect relates to a process for digesting a slurry of bauxite containing alumina monohydrate and alumina trihydrate, comprising: forming a slurry of bauxite containing both alumina monohydrate and trihydrate in caustic solution; adding said slurry and a first portion of a Bayer process spent liquor solution to a first digester; digesting the slurry under temperature and pressure conditions sufficient to dissolve substantially all of said trihydrate contained in said slurry; separating caustic solution containing dissolved alumina trihydrate from remaining slurry containing undissolved solids, without reducing the pressure to atmospheric prior to separation, in a pressurized separator at a temperature above the atmospheric boiling point of the solution; desilicating the separated caustic solution containing dissolved alumina trihydrate to form a desilicated solution; heating a second portion of the Bayer process spent liquor solution; adding the heated second portion of the spent liquor solution and the remaining slurry to a second digester; and digesting the slurry containing undissolved solids in said second digester under conditions effective to dissolve alumina monohydrate included in said slurry.

More specifically, the process comprises:
a) forming a slurry of bauxite in caustic solution;
b) digesting the slurry a first time with a first portion of spent liquor under conditions sufficient to dissolve substantially all of the trihydrate contained in the slurry;
c) carrying out a pressurized solid liquid separation, at or close to the temperature and pressure used to effect the first digestion, on the slurry produced in the first digester to give a low solids caustic solution containing the dissolved alumina trihydrate and a thickened slurry containing the undissolved residual solids;
d) combining the desilicated caustic solution with the slurry exiting from the high pressure temperature digester; or first cooling this desilicated solution separately in flash tanks to the atmospheric boiling point and combining this cooled solution with that cooled slurry exiting from the pressurized solid liquid separation after the high temperature digester;
e) digesting the residual solids from the first digestion, a second time with a separate portion of spent liquor under conditions sufficient to dissolve the alumina monohydrate and any remaining undissolved alumina trihydrate (or all the residual alumina trihydrate in the case that a bauxite containing primarily alumina trihydrate is being processed);
f) cooling the slurry produced in the second digestion to a temperature at or below the atmospheric boiling point of the liquor of the slurry;
g) separating the combined cooled slurry into pregnant liquor, which is forwarded to the precipitation circuit, and a thickened slurry of undissolved solids, referred to as red mud, which is forwarded to the mud washing circuit
h) an alternative to step (f) is to cool the slurry to a temperature intermediate between the atmospheric boiling point of the liquor and the temperature of the second digestion. The cross flow double digestion process also provides for heating the spent liquor in two separate steps and optionally in a manner to reduce or eliminate any danger of corrosion occurring in the high temperature and pressure heat exchangers by:
i) first passing all of the spent liquor through the low temperature heat exchanger, to raise the temperature sufficiently to obtain the dissolution of the trihydrate alumina;
j) dividing the stream exiting from the low temperature heat exchanger into two portions;
k) sending a first portion to the low temperature digester where it reacts with the slurry of bauxite and extracts the trihydrate alumina values;
l) optionally diluting the second portion of the heated spent liquor to be further heated in the high pressure high temperature heat exchanger with one of:
   - a portion of the low solids high A/C ratio overflow liquor having a low free caustic concentration which has been separated from the product of the first digestion;
   - a portion of the high solids underflow slurry separated from the product of the first digester having a liquid component which has a significant A/C ratio and a reduced free caustic concentration;
   - a portion of wash thickener overflow, which has a low caustic concentration but significant A/C ratio and thereby reduces the free caustic concentration in the mixed stream to the high temperature heaters;
   - a portion of contaminated condensate from other parts of the process, this will reduced the free caustic concentration through simple dilution;
m) passing the second portion of the spent liquor, which may optionally have been diluted with another stream as recited in (l) to reduce the free caustic content to a level below which there is no danger of corroding the high temperature high pressure heat exchangers, through the high temperature heat exchangers to raise the temperature sufficiently to obtain dissolution of the alumina values present in the solids being treated in the high temperature digester.

The invention also provides an improved apparatus suitable for the digestion of a slurry containing a bauxite composed of both monohydrate and trihydrate alumina. The apparatus comprises:
a first digester for dissolving alumina trihydrate contained in the slurry in a first portion of a Bayer process spent liquor solution;
a pressurized mud separator for separating caustic solution containing dissolved alumina trihydrate from remaining slurry after completion of a first digestion at a temperature above the atmosphere boiling point of the solution;
a desilication vessel for desilicating the caustic solution containing dissolved alumina trihydrate;
a heat exchanger for heating a second portion of the spent liquor solution;
a second digester for dissolving alumina monohydrate contained in said remaining slurry in said heated second portion of spent liquor solution;
a pump for introducing the remaining slurry and a pump for introducing the second portion of spent liquor solution into the second digester;
and a conduit for feeding desilicated caustic solution containing dissolved alumina trihydrate into a product stream from the second digester.

Analogous processes and apparatus are used for the double digestion of a bauxite composed primarily of trihydrate alumina.

### Brief Description of the Drawings

The apparatus and process of the present invention will now be described by reference to the accompanying drawings in which:
FIG. 1 is a schematic drawings of the digestion apparatus in a typical single digest high temperature circuit;
FIG. 2 is a process flow diagram of a conventional high temperature digester for carrying out extraction or dissolution of alumina contained in bauxite as part of the Bayer process;
FIG. 3 is a process flow diagram of an improvement in the digestion of bauxite to extract alumina monohydrate and trihydrate therefrom in accordance with the present invention;
FIG. 4 is a schematic drawing of a digestion apparatus in accordance with the present invention;
FIG. 5 is a schematic drawing of another embodiment of a digestion apparatus in accordance with the present invention;
FIG. 6 is a schematic drawing of the further embodiment of a digestion apparatus in accordance with the present invention.

### Best Modes For Carrying Out the Invention

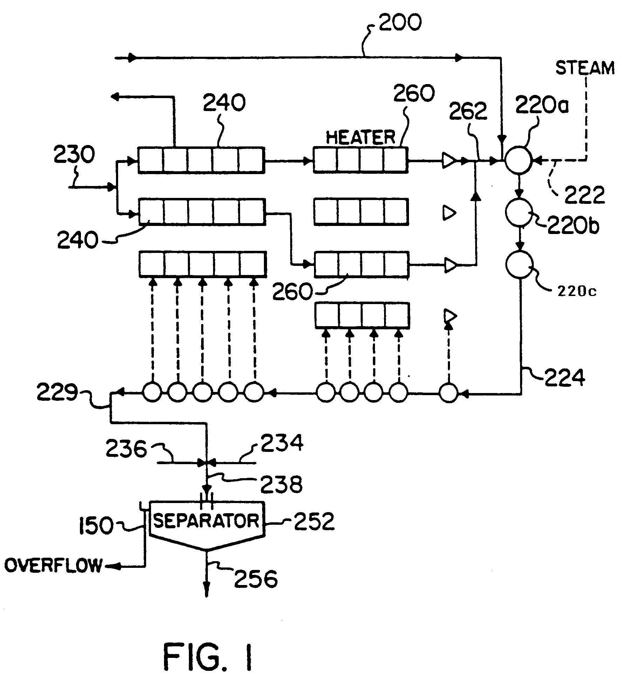

In the drawings, Fig. 1 shows a typical 2-stream high temperature digester for mixed gibbsite/boehmite bauxite. A bauxite slurry stream 200 enters a set of high pressure digesters 220 a,b,c together with preheated process spent liquor 262. The spent liquor 262 is obtained by heating a spent liquor stream 230 in low pressure heaters 240 and high pressure heaters 260. High pressure live steam 222 is also injected into the digesters 220 a,b,c.

A product stream 224 from the digesters is cooled by passing through flash tanks 226 and 228 and the cooled stream 229 is combined with a washer overflow stream 236 and a flocculant solution 234. The combined stream 238 is then fed into a decanter 252 with an overflow being drawn off via line 150 and an underfow product being drawn off via line 256 to send to the wash circuit.

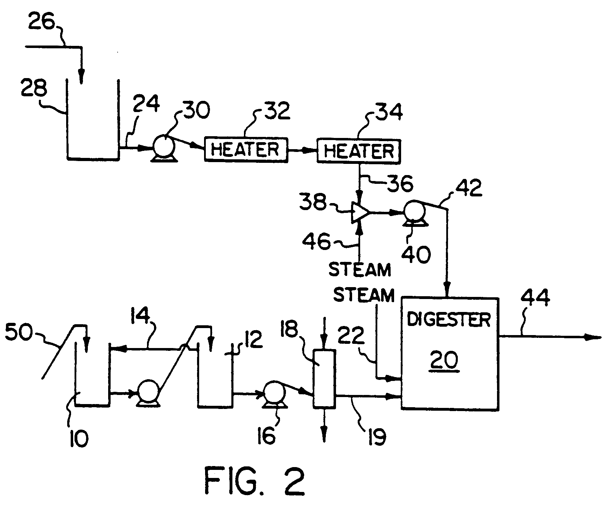

Fig. 2 illustrates a conventional single digestion two-stream high temperature plant for extraction of alumina from bauxite. The bauxite feed or slurry 50 enters tank 10 from wet mills where bauxite is ground and mixed with caustic soda dissolved in water or spent Bayer process liquor to form a slurry containing about 35% to 60% solids. The slurry continues optionally through a pre-desilication circuit 12 commonly comprising about 4 tanks (designated here collectively as numeral 12). These tanks operate in backflow fashion at a temperature of between about 60 to 100°C, with the overflow 14 from each tank being returned to the preceding tank in the series. The underflow meanwhile gets pumped to the next tank in the series. At the end of the pre-desilication circuit, the discharge is pumped by pump 16 to a high pressure pump 18 and then through line 19 to the high pressure digester 20. If desired or felt necessary, an additional injection of steam 22 into the high temperature digester 20 maintains the temperature of the slurry undergoing or about to undergo digestion at a temperature effective to dissolve the undissolved alumina in the slurry.

Spent liquor enters the digestion circuit from pipe 26 which empties into reservoir or test tank 28. The spent liquor stream 24, (also called test tank liquor) undergoing heating in the heating circuit until it reaches or approaches (typically to within 30°C) the temperature required for extraction or digestion of alumina. The spent liquor is pumped through a pump 30 to one or more low temperature heat exchangers 32. After that, the liquor proceeds to one or more high temperature heat exchangers 34. The heated liquor discharged through line 36 is further heated by steam injection 46 at injector 38 until it approaches digestion temperature. Once the spent liquor reaches the desired temperature, a pump 40 feeds the preheated spent liquor through line 42 into the high temperature digester 20. In the high temperature digester 20, the hot liquor from line 42 blends with the bauxite slurry 19 and exits as the combined product slurry 44. Thereafter, the slurry 44 proceeds through a train of flash tanks where pressure is gradually released and gradually returns to atmospheric pressure. The steam released in this process is used in the heaters 32, 34, and 38 for preheating the liquor. At this point, red mud may be removed, leaving sodium aluminate dissolved in the liquor. This liquid may proceed through the circuit to precipitation vessels (not shown).

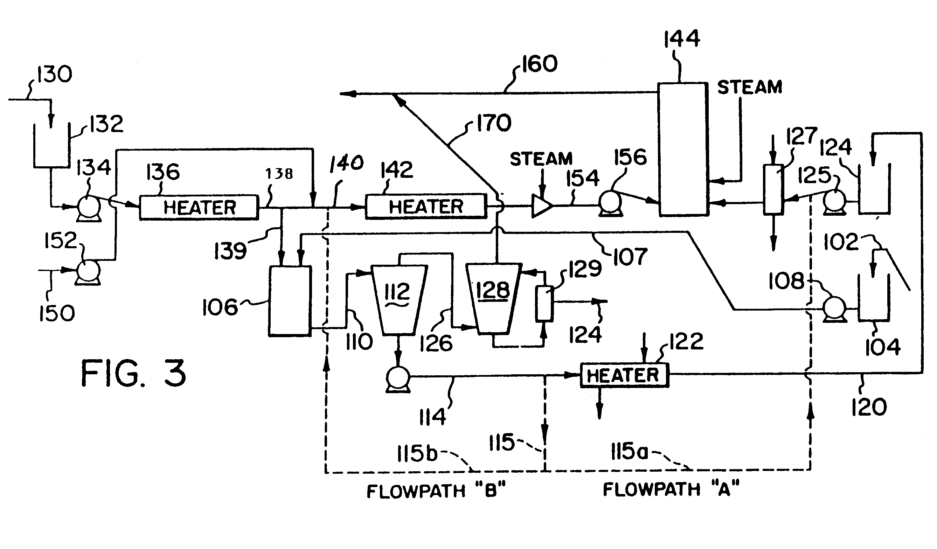

The process of the present invention may be understood by referring to Fig. 3. Mixed bauxite slurry feed optionally desilicated, containing both gibbsite and boehmite enters through inlet line 102. The slurry accumulates in tank 104 and is fed into low pressure digester 106 by line 107 and a bauxite slurry pump 108, preferably a centrifugal pump. In the low pressure digester 106, the slurry undergoes a relatively short digestion under conditions which will extract substantially all of the gibbsitic alumina contained in the bauxite, and yield a slurry having a very high liquor ratio close to the gibbsite solubility ratio (e.g. A/C 0.690--0.760, depending on the liquor caustic concentration and the digest temperature).

The slurry via line 110 enters a pressurized mud separation device 112 operating under conditions of temperature and pressure the same as, or close to, the conditions existing in the digester 106, e.g. a pressurized decanter. The pressurized decanter separates the incoming slurry into a thickened underflow 114 containing the red mud and the undissolved boehmite, and an overflow 126 containing the dissolved gibbsite.

Still referring to Fig. 3, in one embodiment of the invention the thickened underflow stream 114 is pumped to a cooling section 122 after which it is carried by line 120 stored in tank 124. The overflow stream 126 from the decanter 112 undergoes rapid desilication in a pressurized seeded post-desilication reactor 128 which also operates at temperature and pressure close to those existing in the digester. Excess desilication product (DSP) 124 is continuously removed by separator 129. The desilicated stream 170 rejoins or is combined with the stream in the existing flash tank train to maximize overall heat recuperation (preferably where the temperature of the stream 170 closely matches the temperature of the fluid in the flash tank train).

The process of the present invention also provides flexibility in directing the high solids slurry 114 containing boehmitic alumina. In another embodiment of the invention shown in FIG. 3 as FLOWPATH A, the high solids slurry 114 without cooling may be routed through a pipeline 115 directly to a pipeline 115a feeding the high pressure pump 127.

Alternatively, as shown in FIG. 3 as FLOWPATH B, the high solids slurry 114 may be routed along pipelines 115 and 115b to where it may be injected, without cooling, at the header 140 to the high temperature heat exchanger 142 where it joins the liquor stream entering the first stage of the high temperature heat exchanger 142 or it may be injected into the liquor stream within the block of high temperature heat exchangers 142.

Another important aspect of the improved process of the present invention involves the manner in which spent liquor is heated prior to digestion. For example, the spent liquor flow 130 passes, much as in a conventional plant, into reservoir tank 132 and then via pump 134 to low temperature heater or a series of low temperature heaters 136 until the temperature reaches close to that required for gibbsite digestion. The heated spent liquor stream 138 enters the header system 140 between the already existing low pressure 136 and high pressure 142 heat exchangers, the spent liquor stream being divided into two portions. The first portion 139 proceeds to the low pressure digester 106, while the second portion 140 passes to the high pressure heat exchanger 142 without passing through the low temperature exchangers, and then passes into the higher temperature digester. Optionally, at this juncture or location, either a predetermined amount of the wash thickener overflow liquor 150 (containing some dissolved alumina) or a suitable condensate stream or a small portion of the high A/C ratio stream 126 proceeds through pumps 152 and combines only with the part of liquor stream passing to the high temperature heat exchanger 142. The amount of wash thickener overflow liquor 150 or condensate, or stream 126 varies with the parameters of the process being carried out; however, it should be an amount sufficient or effective to lower the free caustic concentration of the stream passing to the high temperature heat exchanger to below the free caustic concentration believed to cause serious heater tube damage in a high temperature heat exchanger. In practice, this free caustic concentration approximates about 145 to about 150 g/l although of course it may vary according to the particular digester and conditions involved.

In addition, since only a half or less of the flow formerly carried through the high temperature heat exchanger 142 before modifying the factory now appears necessary, the velocity in the heat exchanger tubes (not shown) can be reduced to a half or less of the original value which will further reduce tube corrosion and/or erosion in the high temperature heat exchanger 142. By reducing the free caustic concentration in this part of the total liquor flow only in accordance with the present invention, the caustic concentration in the total flow of the circuit, including that portion passing to the gibbsite digester 106 can be raised significantly but in a safe manner. This will increase the production capacity of the total circuit without endangering the high temperature heat exchangers which heat that part of the liquor flow proceeding to the high temperature digester 144.

The preheated portion of spent liquor 154 for the high temperature digester passes through a pump 156 to the high temperature digester 144. In the high temperature digester 144 the boehmite or monohydrate can be extracted more completely or under less drastic conditions than originally used, because the trihydrate has previously been extracted from the solids. The absence of trihydrate in the slurry in the high temperature digester 144 permits more boehmite to dissolve before the boehmite solubility ratio of the given amount of liquor is approached. The boehmite will thus be extracted more completely and/or in a significantly smaller liquor flow than in a conventional process since the portion of the spent liquor flow in the high temperature digester will not also have gibbsite dissolved therein. Less liquor therefore has to be heated to the higher digester temperature, representing an energy saving, and the production capacity of the existing digester 144 increases.

The product of this second digestion 160 may be combined with product stream from the seeded post desilication step 170 (containing the dissolved gibbsite) at an appropriate point in the train or series of flash tanks (not shown).

It should be apparent from the foregoing description that the process of the present invention provides numerous advantages. It can be relatively easily included in a conventional digestion system. An existing conventional single digest circuit (FIG. 1) may be modified by connecting, for example, only three additional vessels, plus the necessary pipes, valves, conduits, and the like. A double digestion, cross-flow process and apparatus of the present invention can thus be added to the digestion portion of a Bayer process plant without major renovation or alteration of the digestion portion of the system. In addition, when these modifications are carried out and the digestion process is carried out in accordance with the present invention, the free caustic concentration of spent liquor can be reduced if required below the critical value believed to cause high temperature heat exchanger corrosion without losing the advantages of having higher caustic concentrations elsewhere in the process. Also, as discussed above, boehmite extraction occurs more completely and efficiently than can be obtained in a conventional process, or at less drastic boehmite digest conditions.

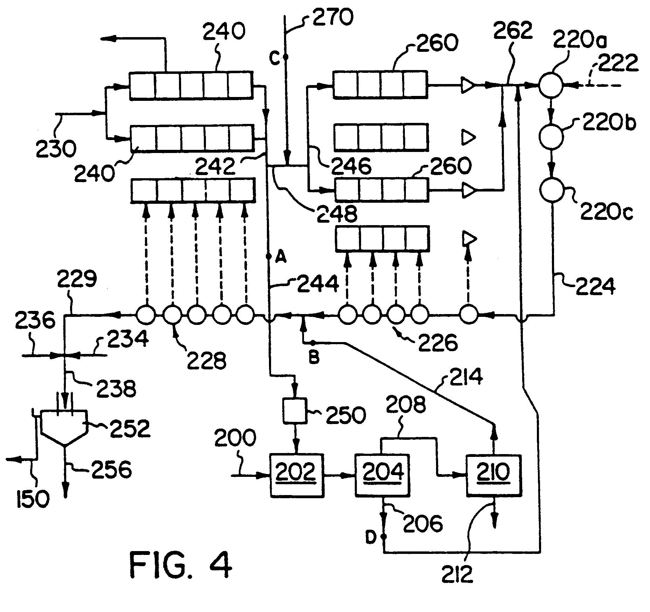

FIG. 4 provides a schematic illustration of an apparatus for carrying out the improved process of the present invention to a typical existing single digest two stream high temperature digester circuit, shown in FIG. 1. Referring to FIG. 4 bauxite slurry 200 enters a digester 202 where it undergoes a short first digestion in a portion of spent liquor 230 preheated in the low temperature heat exchanger 240 to dissolve essentially all of the gibbsite contained in the mixed gibbsite boehmite bauxite slurry. Slurry 200 (having gibbsite now dissolved in the liquid) proceeds to a pressurized decanter 204 or other suitable separation means operating at or close to the temperature and pressure existing in the digester which separates thickened underflow 206 containing a large proportion of solids from low solids overflow 208 containing dissolved gibbsite. The short gibbsite digestion preferably occurs at temperature of a normal low temperature digest, for example, at about 115 to 160 degrees centigrade with a residence time of about 5 to 10 minutes. The low solids slurry of overflow liquor 208 preferably enters a seeded desilication removal unit 210 also operating at or close to the temperature and pressure existing in the digester which precipitates the dissolved silica and separates the desilication product 212 from the overflow 214. The overflow (with the desilication product removed) 214 proceeds to where it will rejoin the product of high pressure digestion discussed below.

Meanwhile, the underflow product or slurry 206 from the pressurized decanter 204 containing the red mud, boehmite and any undissolved gibbsite proceeds to high pressure digesters 220a, b, c. The spent liquor 230 continues as in the unmodified circuit to pass through low pressure heaters (collectively designated as 240) as further shown in Fig. 4. After passing through the low pressure heaters 240, the stream is recombined into a single pipe 242. Further downstream in pipe 242, the liquor flow is split into two portions. A portion required for gibbsite digestion goes through pipe 244 to low pressure live steam heater 250 (or live steam can be injected into the digester 202) and then to the gibbsite digester 202. The remaining portion of the test tank liquor flow 248 is used to dissolve boehmitic alumina content of the bauxite and proceeds through pipe 246 to one or more banks of high pressure heaters 260.

To this second and generally smaller part of the total liquor flow a portion of the pressurized decanter overflow 208 or of first wash thickener overflow 150 from the mud washing circuit, or contaminated condensate may optionally be added through line 270. By adding an effective amount of the overflow liquor, preferably using a booster pump (not shown), the free caustic soda concentration of the stream passing through the high pressure heaters can be lowered below the point at which the point at which serious heater tube damage occurs in high pressure heaters 260, about 145 grams per liter. Alternatively, the free caustic concentration in the liquor to the high pressure heaters 260 can also be reduced in situ by pumping the underflow from the pressurized mud separator 206 back into line 246 thereby achieving single streaming of the high pressure heater 260.

The layout of the apparatus of the present invention provides advantageous flexibility as well. For example, while FIG. 4 provides important increases in productivity through relatively simple modifications achievable at very low cost, other modifications may also provide benefits. In FIG. 4, A, B, C and D designate valves the purpose of which is explained hereinafter.

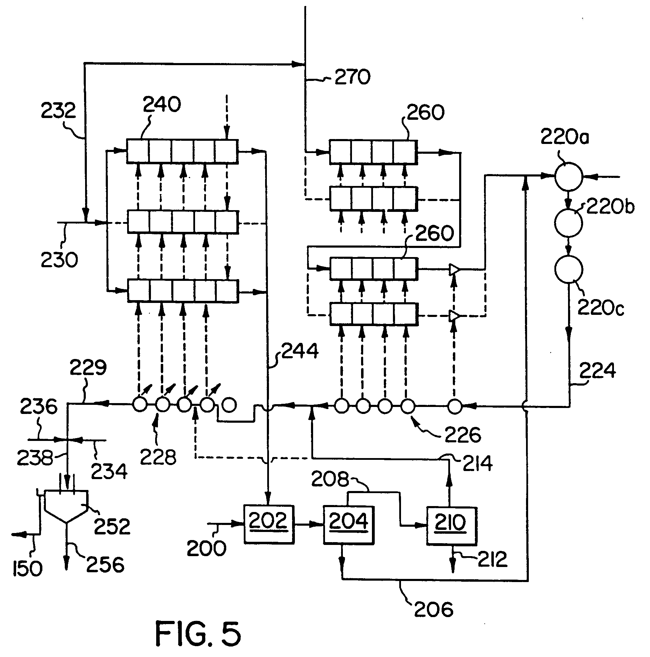

FIG. 5 illustrates another embodiment of the invention desirable for some applications. The apparatus of Fig. 5 is essentially similar to that of Fig. 4, but differs in a number of important respects. For example, the spent liquor inlet 230 includes a line 232 which can carry a portion of the spent liquor to line 270 where it may optionally be combined with part of the first washer overflow or added condensate. This portion of the spent liquor flow destined to the high temperature digester 220 is first passed through one or more banks of heat exchangers 260 no longer needed in the high temperature heat exchanger block because now a much smaller flow of liquor is passed through the high temperature heater block. These surplus heaters are now coupled to the low temperature flash tanks and are used as low temperature heaters. The stream of spent liquor then continues to one or more blocks of existing high temperature heaters, and then passes to the high temperature digester. This arrangement permits improved heat balance, increased production, and some cogeneration of heat and energy.

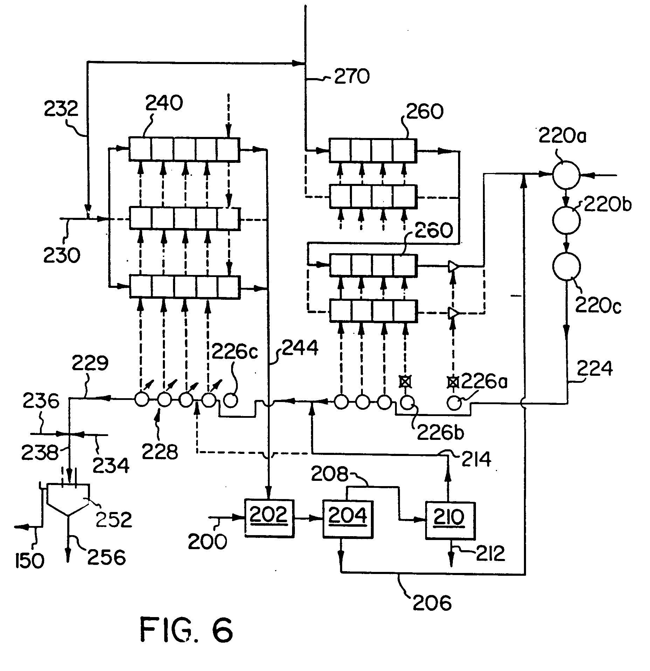

A slightly more complex embodiment of the apparatus of the present invention may be viewed with reference to FIG. 6. The apparatus of Fig. 6 resembles that of Fig. 5 but provides the ability for flow lines 224 to bypass some of the existing flash tanks (226a, 226b, 226c), which become available for conversion into spare decanting or post-desilication vessels, and provides for the injection of live steam into the liquor passing to the high pressure digesters. The apparatus of Fig. 6 provides still further improvement in heat balance, although presently it does not appear to provide any further improvement in productivity. The apparatus of Fig. 6 does, however, provide for lowering the boehmite digestion temperature at the cost of using a somewhat increased liquor flow to the high temperature digester which in turn increases the possibility of cogeneration. Bypassing vessels (as in Fig. 6) frees these vessels to act as spares for gibbsite pressure decanter and the seeded post-desilication reactor, and reduced digester temperature appears to help reduce quartz attack, thereby reducing caustic consumption.

From the foregoing it should now be clear to a person of ordinary skill that as a result of increasing spent liquor caustic concentration while also increasing the average ratio leaving digestion as a result of the high ratio which can be achieved in the gibbsite digester, there will be a significant increase in digestion production and digester liquor productivity. This in turn means less total steam consumption per ton of product and enables substitution of low pressure steam for as much as half of the high pressure steam now used in the process. Additionally, since the total liquor flow may be reduced by half in the high temperature heat exchanger, pumping energy can be saved since the total liquor flow no longer must be pumped against high temperature digester pressure. The small reduction in net wash water available for red mud washing due to reduced flashing can be compensated in most cases by an increase in synthetic flocculent dosage in the red mud washers to improve underflow solids concentration in the washing circuit.

The advantages of the apparatus or the present invention include the relative simplicity in which it can be implemented by modifying the conventional digestion apparatus depicted in FIG. 1. Only three additional vessels need to be installed, and while spares can be provided, these are unnecessary since the additional vessels can be removed from service for maintenance by reverting to the conventional process (FIG. 1). This involves little more than closing a few valves indicated in FIG. 4 by A, B, C and D, and diverting bauxite slurry 200 to its original path. While the system will operate during the maintenance period at reduced efficiency and productivity, efficiency and productivity increase once again when the vessels are returned to service.

In addition to rapid changeover, the ability to lower free caustic concentration (below a critical heat exchanger corrosion value) lowers corrosion even though productivity increases significantly. Also, most of the energy input in the apparatus is required for the low temperature digester (∼ 130-150°C) instead of all being required for the high temperature digester ≧ 240°C), which makes energy cost savings by making cogeneration of heat and power possible.

It should be understood that the present invention has been described with reference to preferred embodiments of the process and apparatus. Various modifications, alterations and equivalents will occur to those of ordinary skill in the art. For example, further benefits could be achieved by oversizing the low cost, low temperature gibbsite digester to permit more of the already installed capacity of the high temperature digester unit to be used while processing up to two or more times the present bauxite throughput. Further, a part of the high-ratio desilicated liquor from the seeded pressure post-desilication could be cooled separately and passed to an agglomerating section in the precipitation circuit to permit still higher caustic concentrations to be used in precipitation while maintaining product size, strength, and soda content. Additionally, the present invention could be combined with sweetening of the high temperature loop of the digester with trihydrate bauxite to achieve still further production at almost no increase in energy consumption during digestion. With minor modification, the process could also be applied to reduce the boehmite digester temperature of an existing single stream high temperature digest circuit. This could conceivably eliminate the high iron impurity levels now typical in the product from such units. It will be further understood that although the discussion has been largely directed at the more difficult case of retrofitting the cross flow double digest process of the invention to single digest high temperature circuits for processing boehmite containing bauxite, it is equally possible to achieve in an analogous way similar process benefits by retrofitting this cross flow double digestion process to any existing single digest low temperature circuit processing gibbsitic or trihydrate alumina bauxite.

## Claims

1. A process for digesting a slurry of bauxite containing alumina monohydrate and alumina trihydrate, comprising:
forming a slurry of bauxite containing both alumina monohydrate and trihydrate in caustic solution;
adding said slurry and a first portion of a Bayer process spent liquor solution to a first digester;
digesting the slurry under temperature and pressure conditions sufficient to dissolve substantially all of said trihydrate contained in said slurry;
separating caustic solution containing dissolved alumina trihydrate from remaining slurry containing undissolved solids, without reducing the pressure to atmospheric prior to separation, in a pressurized separator at a temperature above the atmospheric boiling point of the solution;
disilicating the separated caustic solution containing dissolved alumina trihydrate to form a desilicated solution;
heating a second portion of the Bayer process spent liquor solution;
adding the heated second portion of the spent liquor solution and the remaining slurry to a second digester; and
digesting the slurry containing undissolved solids in said second digester under conditions effective to dissolve alumina monohydrate included in said slurry.

2. A process in accordance with claim 1, wherein the desilicated caustic solution containing dissolved alumina trihydrate is combined with the product from the second digester.

3. A process in accordance with claim 1, wherein the slurry containing undissolved solids is cooled to below the boiling point at atmospheric pressure of the liquor in said slurry prior to digesting said slurry in said second digester.

4. A process in accordance with any one of claims 1-3, further comprising diluting the second portion of spent liquor solution prior to heating said second portion to reduce the free caustic content thereof to a level below that which causes corrosion to heat exchangers used for said heating.

5. A process in accordance with claim 1 for digesting a mixed bauxite slurry containing boehmitic and gibbsitic alumina, comprising;
(a) digesting the mixed bauxite slurry in caustic solution to dissolve at least a major portion of the gibbsitic alumina to yield a product slurry having an alumina to caustic ratio close to the gibbsite solubility ratio;
(b) separating the product slurry into a thickened underflow stream containing red mud and boehmitic alumina and a low solids overflow stream containing dissolved gibbsite;
(c) desilicating the low solids overflow stream to form a desilicated overflow liquor;
(d) feeding the thickened underflow stream to a high pressure digester;
(e) adding to the thickened underflow stream an amount of spent liquor sufficient to lower the free caustic concentration of the thickened underflow stream below about 145 to 150 g/l;
(f) digesting said thickened underflow stream containing the added spent liquor in said high temperature digester to dissolve boehmitic alumina contained in said underflow stream; and
(g) combining the dissolved boehmitic alumina with the desilicated overflow liquor.

6. A process in accordance with claim 5, wherein the dissolved boehmitic alumina is recombined with the desilicated overflow liquor at a location wherein the temperature of the desilicated overflow liquor approxmates the temperature of the dissolved boehmitic alumina.

7. A process in accordance with claim 6, wherein the location is a flash train of vessels.

8. A process in accordance with claim 4, wherein a condensate stream is added to the second portion of spent liquor solution in an amount effective to lower the free caustic concentration of the spent liquor below a concentration wherein the free caustic concentration causes corrosion to heat exchangers.

9. A process in accordance with claim 8, additionally comprising the step of recombining the slurry from the second digestion step including the dissolved alumina monohydrate with the desilicated solution at a location wherein the temperature of the desilicated solution approximates the temperature of the slurry from the second digestion step.

10. A process in accordance with clam 9, wherein recombining takes place in a series of flash tanks.

11. A process in accordance with any one of claims 1-3, further comprising the step of adding a portion of wash thickener overflow to said second portion of spent liquor solution prior to heating said second portion of spent liquor solution.

12. A process in accordance with claim 11, wherein the wash thickener overflow is added to the second portion of spent liquor solution in an amount effective to lower the free caustic concentration of said spent liquor below a concentration wherein the free caustic concentration causes corrosion to heat exchangers.

13. A process in accordance with any one of claims 1-3, further comprising the step of adding a portion of the slurry containing undissolved solids from the first digester to said second portion of spent liquor solution prior to heating said second portion of spent liquor solution.

14. A process in accordance with claim 13, wherein the portion of the slurry containing undissolved solids is added to the second portion of spent liquor solution in an amount effective to lower the free caustic concentration of said spent liquor below a concentration wherein the free caustic concentration causes corrosion to heat exchangers.

15. A process in accordance with claim 8, 12 or 14, wherein the free caustic concentration is lowered to about 145 to 150 g/l.

16. A process in accordance with claim 1, wherein the first portion of the spend liquor solution and the second portion of the spent liquor solution flow from a single incoming stream of spent liquor.

17. A process in accordance with claim 5, wherein the product slurry of (a) has an alumina to caustic ratio of about 0.690-0.760.

18. An apparatus for digestion of a bauxite slurry (102) containing alumina monohydrate and alumina trihydrate according to the process of claim 1, comprising:
a first digester (106) for dissolving alumina trihydrate contained in the slurry (102) in a first portion of a Bayer process spent liquor solution (139);
a pressurized mud separator for separating caustic solution containing dissolved alumina trihydrate (126) from remaining slurry (114) after completion of a first digestion at a temperature above the atmosphere boiling point of the solution;
a desilication vessel (128) for disilicating the caustic solution (126) containing dissolved alumina trihydrate;
a heat exchanger (142) for heating a second portion of the spent liquor solution (140);
a second digester (144) for dissolving alumina monohydrate contained in said remaining slurry (114) in said heated second portion (154) of spent liquor solution;
a pump (125) for introducing the remaining slurry and a pump (156) for introducing the second portion of spent liquor solution into the second digester (144),
and a conduit (170) for feeding desilicated caustic solution containing dissolved alumina trihydrate into a product stream (160) from the second digester (144).

## Patentansprüche

1. Verfahren zur Auslaugung einer Bauxitaufschlämmung, die Aluminiumoxidmonohydrat und Aluminiumoxidtrihydrat enthält, umfassend:
Bildung einer Bauxitaufschlämmung, die sowohl Aluminiumoxidmonohydrat und -trihydrat in Laugenflüssigkeit enthält;
Einführung besagter Aufschlämmung und eines ersten Anteils einer erschöpften Bayer-Prozess-Laugenlösung in einen ersten Autoklaven;
Auslaugen der Aufschlämmung unter Temperatur- und Druckbedingungen, die zur Auflösung von weitestgehend allem in der Aufschlämmung enthaltenem Trihydrat ausreichen;
Abtrennung der Laugenflüssigkeit, die das aufgelöste Aluminiumoxidtrihydrat enthält, von der zurückbleibenden Aufschlämmung, die ungelöste Feststoffe enthält, ohne den Druck vor der Abtrennung auf Atmosphärendruck zu senken, in einem druckbeaufschlagten Separator bei einer Temperatur oberhalb des Atmosphärendruck-Siedepunkts der Lösung;
Entsilikatisierung der abgetrennten Laugenflüssigkeit, die aufgelöstes Aluminiumoxidtrihydrat enthält, wodurch eine entsilikatisierte Lösung gebildet wird;
Erhitzen eines zweiten Anteils der erschöpften Bayer-Prozess-Laugenflüssigkeit;
Zugabe des erhitzten zweiten Anteils der erschöpften Laugenflüssigkeit und der verbleibenden Aufschlämmung in einen zweiten Autoklaven; und
Auslaugung der Aufschlämmung, die ungelöste Feststoffe enthält, in besagtem zweiten Autoklaven unter Bedingungen, unter denen die Auflösung des in der besagten Aufschlämmung enthaltenen Aluminiumoxidmonohydrats bewirkt wird.

2. Verfahren gemäss Anspruch 1, worin die entsilikatisierte Laugenflüssigkeit, die gelöstes Aluminiumoxidtrihydrat enthält, mit dem Produkt aus dem zweiten Autoklaven kombiniert wird.

3. Verfahren gemäss Anspruch 1, worin die Aufschlämmung, die ungelöste Feststoffe enthält, unter den Atmosphärendruck-Siedepunkt der Flüssigkeit in der Aufschlämmung abgekühlt wird, bevor die besagte Aufschlämmung in dem zweiten Autoklaven ausgelaugt wird.

4. Verfahren gemäss mindestens einem der Ansprüche 1 bis 3, weiterhin umfassend die Verdünnung des zweiten Anteils der erschöpften Laugenlösung vor dem Erhitzen besagten zweiten Anteils, wodurch dessen Gehalt an freier Beize auf ein Niveau reduziert wird, das unterhalb eines Niveaus liegt, das die Korrosion der für das Aufheizen verwendeten Wärmeaustauscher bewirkt.

5. Verfahren gemäss Anspruch 1 zur Auslaugung einer gemischten Bauxitaufschlämmung, die boehmitisches und gibbsitisches Aluminiumoxid enthält, umfassend:
(a) Auslaugung der gemischten Bauxitaufschlämmung in Laugenflüssigkeit, wodurch mindestens ein Hauptanteil des gibbsitischen Aluminiumoxids aufgelöst wird, wodurch eine Produktaufschlämmung erhalten wird, die ein Aluminiumoxid-zu-Beize-Verhältnis aufweist, das nahe dem Gibbsit-Löslichkeitsverhältnis liegt;
(b) Auftrennung der Produktaufschlämmung in einen eingedickten Unterflussstrom, der Rotschlamm und boehmitisches Aluminiumoxid enthält, und einen Niederfeststoff-Überflussstrom, der aufgelöstes Gibbsit enthält;
(c) Entsilikatisierung des Niederfeststoff-Überflussstroms, wodurch eine entsilikatisierte Überflusslauge gebildet wird;
(d) Einführung des eingedickten Unterflussstroms in einen Hochdruck-Autoklaven;
(e) Zugabe einer Menge an erschöpfter Lauge zu dem eingedickten Unterflussstrom, die ausreicht, die freie Beizenkonzentration des eingedickten Unterflussstroms auf weniger als etwa 145 bis 150 g/ℓ abzusenken;
(f) Auslaugung des besagten eingedickten Unterflussstroms, der die zugegebene erschöpfte Lauge enthält, in besagtem Hochtemperatur-Autoklaven, wodurch in besagtem Unterflussstrom enthaltenes boehmitisches Aluminiumoxid aufgelöst wird; und
(g) Zusammenführung des aufgelösten boehmitischen Aluminiumoxids mit der entsilikatisierten Überflusslauge.

6. Verfahren gemäss Anspruch 5, worin das aufgelöste boehmitische Aluminiumoxid mit der entsilikatisierten Überflusslauge an einer Stelle rekombiniert wird, wo die Temperatur der entsilikatisierten Überflusslauge etwa der Temperatur des aufgelösten boehmitischen Aluminiumoxids entspricht.

7. Verfahren gemäss Anspruch 6, worin der Ort ein Zug von Kondensatkesseln (flash train of vessels) ist.

8. Verfahren gemäss Anspruch 4, worin zu dem zweiten Anteil erschöpfter Laugenlösung ein Kondensatstrom in einer Menge zugegeben wird, die die Absenkung der freien Beizenkonzentration in der erschöpften Lauge unter eine Konzentration, die die Korrosion der Wärmeaustauscher hervorruft, bewirkt wird.

9. Verfahren gemäss Anspruch 8, das zusätzlich den Schritt umfasst, worin die Aufschlämmung aus dem zweiten Auslaugschritt, die das aufgelöste Aluminiumoxidmonohydrat einschliesst, mit der entsilikatisierten Lösung an einem Ort rekombiniert wird, an dem die Temperatur der entsilikatisierten Lösung etwa derjenigen der Aufschlämmung aus dem zweiten Auslaugschritt entspricht.

10. Verfahren gemäss Anspruch 9, worin die Rekombinierung in einer Reihe von Kondensatsammlern (flash tanks) stattfindet.

11. Verfahren gemäss mindestens einem der Ansprüche 1 bis 3, das ferner den Schritt der Zugabe eines Anteils an Schlämmeindickerüberfluss zu besagtem zweiten Anteil an erschöpfter Laugenlösung vor dem Aufheizen des besagten zweiten Anteils erschöpfter Laugenlösung umfasst.

12. Verfahren gemäss Anspruch 11, worin der Schlämmeindickungsüberfluss zu dem zweiten Anteil erschöpfter Laugenlösung in einer Menge zugegeben wird, die die Absenkung der freien Beizenkonzentration der besagten erschöpften Lauge unter eine Konzentration bewirkt, bei der die freie Beizenkonzentration die Korrosion der Wärmeaustauscher hervorruft.

13. Verfahren gemäss mindestens einem der Ansprüche 1 bis 3, das ferner den Schritt der Zugabe eines Anteils der Aufschlämmung, die ungelöste Feststoffe enthält, aus dem ersten Autoklaven zu besagtem zweiten Anteil erschöpfter Laugenlösung vor dem Erhitzen des besagten zweiten Anteils erschöpfter Laugenlösung umfasst.

14. Verfahren gemäss Anspruch 13, worin der Anteil der Aufschlämmung, der ungelöste Feststoffe enthält, zu dem zweiten Anteil erschöpfter Laugenlösung in einer Menge zugegeben wird, die die Absenkung der freien Beizenkonzentration der besagten erschöpften Lauge unterhalb eine Konzentration bewirkt, bei der die freie Beizenkonzentration die Korrosion der Wärmeaustauscher hervorruft.

15. Verfahren gemäss Anspruch 8, 12 oder 14, worin die freie Beizenkonzentration auf etwa 145 bis 150 g/ℓ abgesenkt wird.

16. Verfahren gemäss Anspruch 1, worin der erste Anteil der erschöpften Laugenlösung und der zweite Anteil der erschöpften Laugenlösung aus einem einzigen eingehenden Strom erschöpfter Lauge fliessen.

17. Verfahren gemäss Anspruch 5, worin die Produktaufschlämmung von (a) ein Aluminiumoxid-zu-Beize-Verhältnis von etwa 0,690 bis 0,760 aufweist.

18. Vorrichtung zum Auslaugen einer Bauxitaufschlämmung (102), die Aluminiumoxidmonohydrat und Aluminiumoxidtrihydrat enthält, nach dem Verfahren gemäss Anspruch 1, die folgendes umfasst:
einen ersten Autoklaven (106) zur Auflösung von Aluminiumoxidtrihydrat, das in der Aufschlämmung (102) enthalten ist, in einem ersten Anteil einer erschöpften Bayer-Prozess-Laugenlösung (139);
einen druckbeaufschlagten Schlammseparator zur Abtrennung von Beizenlösung, die aufgelöstes Aluminiumoxidtrihydrat (126) enthält, von zurückbleibender Aufschlämmung (114) nach Beendigung der ersten Auslaugung bei einer Temperatur oberhalb des Atmosphärendruck-Siedepunkts der Lösung;
einen Entsilikatisierungskessel (128) zur Entsilikatisierung der Beizenlösung (126), die aufgelöstes Aluminiumoxidtrihydrat enthält;
einen Wärmeaustauscher (142) zur Aufheizung eines zweiten Anteils der erschöpften Laugenlösung (140);
einen zweiten Autoklaven (144) zur Auflösung von Aluminiumoxidmonohydrat, das in besagter zurückbleibender Aufschlämmung (114) enthalten ist, in dem besagten erhitzten zweiten Anteil (154) der erschöpften Laugenlösung;
eine Pumpe (125) zur Einführung der verbleibenden Aufschlämmung, und eine Pumpe (156) zur Einführung eines zweiten Anteils erschöpfter Laugenlösung in den zweiten Autoklaven (144);
und eine Rinne (170) zur Einführung entsilikatisierter Beizenlösung, die aufgelöstes Aluminiumoxidtrihydrat enthält, in den Produktstrom (160) aus dem zweiten Autoklaven (144).

## Revendications

1. Procédé pour digérer une suspension de bauxite contenant du monohydrate d'alumine et du trihydrate d'alumine, consistant:
- à former une suspension de bauxite contenant à la fois du monohydrate et du trihydrate d'alumine en solution caustique;
- a ajouter ladite suspension et une première portion d'une solution de liqueur épuisée par le procédé Bayer à un premier digesteur;
- à digérer la suspension dans des conditions de température et de pression suffisantes pour dissoudre sensiblement la totalité dudit trihydrate contenu dans ladite suspension;
- à séparer la solution caustique contenant le trihydrate d'alumine dissous de la suspension restante contenant les solides non dissous, sans réduire la pression à la pression atmosphérique avant la séparation, dans un séparateur sous pression à une température supérieure au point d'ébullition de la solution sous la pression atmosphérique;
- à désilicater la solution caustique séparée contenant le trihydrate d'alumine dissous pour former une solution désilicatée;
- à chauffer une deuxième partie de la solution de liqueur épuisée par le procédé Bayer;
- à ajouter la deuxième portion chauffée de la solution de liqueur épuisée et la suspension restante à un deuxième digesteur; et
- à digérer la suspension contenant les solides non dissous dans ledit deuxième digesteur dans des conditions efficaces pour dissoudre le monohydrate d'alumine inclus dans ladite suspension.

2. Procédé selon la revendication 1, dans lequel la solution caustique désilicatée contenant le trihydrate d'alumine dissous est combinée avec le produit provenant du deuxième digesteur.

3. Procédé selon la revendication 1, dans lequel la suspension contenant les solides non dissous est refroidie au-dessous du point d'ébullition à la pression atmosphérique de la liqueur dans ladite suspension avant de digérer ladite suspension dans ledit deuxième digesteur.

4. Procédé selon l'une quelconque des revendications 1 à 3, comprenant une étape supplémentaire de dilution de la deuxième portion de solution de liqueur épuisée avant de chauffer ladite deuxième portion pour réduire leur teneur en caustique libre à une valeur inférieure à celle qui provoque une corrosion des échangeurs de chaleur utilisés pour ledit chauffage.

5. Procédé selon la revendication 1 pour digérer une suspension de bauxite mélangée contenant l'alumine boéhmitique et gibbsitique, comprenant les étapes consistant à:
(a) digérer la suspension de bauxite mélangée dans une solution caustique pour dissoudre au moins une portion principale de l'alumine gibbsitique pour produire une suspension de produit ayant un rapport alumine à caustique proche du rapport de solubilité de la gibbsite;
(b) séparer la suspension du produit dans un courant de fond épaissi contenant de la boue rouge et de l'alumine boéhmitique et un courant de surface à faible teneur en solides contenant la gibbsite dissoute;
(c) désilicater le courant de surface à faible teneur en solides pour former une liqueur de surface désilicatée;
(d) introduire le courant de fond épaissi dans un digesteur sous pression élevée;
(e) ajouter au courant de fond épaissi une quantité de liqueur épuisée suffisante pour abaisser la concentration en caustique libre du courant de fond épaissi au-dessous d'environ 145 à 150 g/l;
(f) digérer ledit courant de fond épaissi contenant la liqueur épuisée dans ledit digesteur à température élevée pour dissoudre l'alumine boéhmitique contenue dans ledit courant de fond; et
(g) combiner l'alumine boéhmitique dissoute avec la liqueur de surface désilicatée.

6. Procédé selon la revendication 5, dans lequel l'alumine boéhmitique dissoute est recombinée avec la liqueur de surface désilicatée à un endroit où la température de la liqueur de surface désilicatée s'approche de la température de l'alumine boéhmitique dissoute.

7. Procédé selon la revendication 6, dans lequel l'endroit est un train de récipients de détente.

8. Procédé selon la revendication 4, dans lequel un courant condensé est ajouté à la deuxième portion de la solution de liqueur épuisée en une quantité efficace pour abaisser la concentration en caustique libre de la liqueur épuisée au-dessous d'une concentration où la concentration en caustique libre provoque une corrosion des échangeurs de chaleur.

9. Procédé selon la revendication 8, comprenant de plus l'étape consistant à recombiner la suspension provenant de la deuxième étape de digestion incluant le monohydrate d'alumine dissous avec la solution désilicatée à un endroit où la température de la solution désilicatée s'approche de la température de la suspension provenant de la deuxième étape de digestion.

10. Procédé selon la revendication 9, dans lequel la recombinaison a lieu en une série de cuves de détente.

11. Procédé selon l'une quelconque des revendications 1 à 3, comprenant de plus l'étape consistant à ajouter une portion d'un agent d'épaississement de lavage de surface à ladite deuxième portion de solution de liqueur épuisée avant de chauffer ladite deuxième portion de solution de liqueur épuisée.

12. Procédé selon la revendication 11, dans lequel l'agent d'épaississement de lavage de surface est ajouté à la deuxième portion de solution de liqueur épuisée en une quantité efficace pour abaisser la concentration en caustique libre de ladite liqueur épuisée au-dessous d'une concentration où la concentration en caustique libre provoque une corrosion des échangeurs de chaleur.

13. Procédé selon l'une quelconque des revendications 1 à 3, comprenant de plus l'étape consistant à ajouter une portion de la suspension contenant les solides non dissous provenant du premier digesteur vers ladite deuxième portion de solution de liqueur épuisée avant de chauffer ladite deuxième portion de solution de liqueur épuisée.

14. Procédé selon la revendication 13, dans lequel la portion de la suspension contenant les solides non dissous est ajoutée à la deuxième portion de la solution liqueur épuisée en une quantité efficace pour abaisser la concentration en caustique libre de ladite liqueur épuisée au-dessous d'une concentration où la concentration en caustique libre provoque une corrosion des échangeurs de chaleur.

15. Procédé selon la revendication 8, 12 ou 14, dans lequel la concentration en caustique libre est abaissée à environ 145 à 150 g/l.

16. Procédé selon la revendication 1, dans lequel la première portion de la solution de liqueur épuisée et la deuxième portion de la solution de liqueur épuisée s'écoulent à partir d'un courant entrant unique de liqueur épuisée.

17. Procédé selon la revendication 5, dans lequel la suspension du produit de (a) possède un rapport d'alumine à caustique d'environ 0,690 à 0,760.

18. Appareil pour digérer une suspension de bauxite (102) contenant du monohydrate d'alumine et du trihydrate d'alumine selon le procédé de la revendication 1, comprenant:
- un premier digesteur (106) pour dissoudre le trihydrate d'alumine contenu dans la suspension (102) dans une première portion d'une solution de liqueur épuisée par le procédé Bayer (139);
- un séparateur de boue sous pression pour séparer la solution caustique contenant le trihydrate d'alumine dissous (126) de la suspension restante (114) après achèvement d'une première digestion à une température supérieure au point d'ébullition sous la pression atmosphérique de la solution;
- un récipient de désilicatisation (128) pour désilicater la solution caustique (126) contenant le trihydrate d'alumine dissous;
- un échangeur de chaleur (142) pour chauffer une deuxième portion de la solution de liqueur épuisée (140);
- un deuxième digesteur (144) pour dissoudre le monohydrate d'alumine contenu dans ladite suspension restante (114) dans ladite deuxième portion chauffée (154) de solution de liqueur épuisée;
- une pompe (125) pour introduire la suspension restante et une pompe (156) pour introduire la deuxième portion de solution de liqueur épuisée dans le deuxième digesteur (144); et
- un conduit (170) pour introduire la solution caustique désilicatée contenant le trihydrate d'alumine dissous dans un courant de produit (160) provenant du deuxième digesteur (144).
